# EUROPÄISCHE PATENTSCHRIFT

(11) **EP 0 826 073 B1**
(45) Veröffentlichungstag und Bekanntmachung des Hinweises auf die Patenterteilung: **21.04.1999**
(21) Anmeldenummer: 96919577.5
(22) Anmeldetag: 17.05.1996
(51) Int. Cl.: C23C 2/00, B22D 11/00

(54) **VERFAHREN UND VORRICHTUNG ZUR HERSTELLUNG VON METALLISCHEM VERBUNDWERKSTOFF**
PROCESS AND DEVICE FOR PRODUCING METALLIC COMPOSITE MATERIALS
PROCEDE ET DISPOSITIF PERMETTANT DE PRODUIRE UN MATERIAU COMPOSITE METALLIQUE

(30) Priorität: 19.05.1995 DE 19519068
(43) Veröffentlichungstag der Anmeldung: 04.03.1998
(73) Patentinhaber: MANNESMANN Aktiengesellschaft, 40213 Düsseldorf (DE)
(72) Erfinder: EL GAMMAL, Tarek, D-52072 Aachen (DE); MEGAHED, Gamal, Mohamed, New-Maadi, Kairo (EG); PLESCHIUTSCHNIGG, Fritz-Peter, Dr., D-47269 Duisburg (DE); VON HAGEN, Ingo, D-47800 Krefeld (DE)
(74) Vertreter: Henze, Lothar
(86) Internationale Anmeldenummer: DE9600907
(87) Internationale Veröffentlichungsnummer: WO9636744

(56) Entgegenhaltungen:
- WO-A-87/07192
- US-A- 2 015 154
- US-A- 3 262 192
- PATENT ABSTRACTS OF JAPAN vol. 9, no. 7 (M-350), 12.Januar 1985 & JP,A,59 156538 (NIPPON KOKAN), 5.September 1984,

## Beschreibung

Die Erfindung betrifft ein Verfahren zur Herstellung von metallischem Verbundwerkstoff, bei dem auf mindestens einer Seite eines Mutterstranges ein Werkstoff mit anderen Werkstoffeigenschaften aufgebracht wird und einer Einrichtung hierzu, die ein Gefäß besitzt, das im Boden eine Öffnung aufweist, durch die der Mutterstrang durch eine in das Gefäß füllbare Metallschmelze führbar ist und Rollen zum Bewegen des Stranges beim Eintritt wie auch beim Verlassen der Schmelze.

Zum Verbinden von zwei metallischen Werkstoffen, von denen einer ein Endlosstrang ist, sind im wesentlichen das Sprühkompaktieren und das Inversionsgießen bekannt.

Nachteil des erstgenannten Verfahrens, bei dem ein metallischer Sprühnebel auf ein Trägerprofil aufgebracht wird, ist neben der komplizierten Verfahrensführung insbesondere der hohe Sprühverlust.

Darüber hinaus ist das Verfahren im wesentlichen auf rotationssymmetrische Formen beschränkt.

Das weiterhin genannte Inversionsgießen ist beispielsweise aus der Schrift EP 0 311 602 bekannt. Nachteil dieses Verfahrens, bei dem ein Mutterstrang durch eine Schmelze geführt wird und dort an der Oberfläche haftend aus dem Bad herausgeführt wird, ist das Erfordemis, daß der Werkstoff des Mutterstranges gleich oder zumindest ähnlich dem des Schmelzbades ist.

Die Erfindung hat sich das Ziel gesetzt, ein Verfahren und eine dazu erforderliche Einrichtung zu schaffen, mit einfachen Mitteln metallische Verbundwerkstoff-Profile zu erzeugen, deren Werkstoffeigenschaften sich deutlich unterscheiden und die besondere große Differenzen des Erstarrungs- und Schmelzpunktes aufweisen.

Die Erfindung erreicht das Ziel durch die kennzeichnenden Merkmale des Verfahrensanspruches 1 und des Vorrichtungsanspruches 9. Bevorzugte Ausführungen des Verfahrens bzw. der Vorrichtung sind in den Ansprüchen 2-8 und 9-11 definiert.

Erfindungsgemäß wird ein Mutterstrang mit einer Geschwindigkeit durch eine die gleiche werkstoffliche Zusammensetzung wie der Mutterstrang aufweisende Schmelze geführt, bei der inversiv die drei- bis sechsfache Menge der Schmelze sich mit dem Mutterstrang zu einem Trägerprofil verbindet. Diesem Trägerprofil wird unmittelbar nach Verlassen des Schmelzbades ein Verbundprofil zugeführt, das sich mit diesem verschweißt. Bei diesem Verfahren werden beim Verbinden von Werkstoffen, beispielsweise als zwei- oder dreilagige Bleche, etwa ein austenitischer mit einem kohlenstoffhaltigen Stahl, die Probleme bei der Verschweißung der Werkstoffe untereinander vermieden. Tritt etwa ein C-Stahl als Mutterprofil beim Inversionsgießen in eine austenitische Schmelze mit einer Betriebstemperatur von 1.465 °C und somit 15°C oberhalb des Schmelzpunktes ein, so kann das Mutterprofil an seiner Oberfläche mit einem Schmelzpunkt von 1.520 °C nicht aufgeschmolzen werden. Bei dieser hohen Differenz der beiden Schmelzpunkte findet eine schnelle Verschweißung nicht statt.

Bei der Erfindung wird beispielsweise bei der Erzeugung von Bändem mit einer Dicke des Fertigbandes zwischen 4 und 10 mm ein Mutterband aus C-Stahl durch eine Schmelze der gleichen oder ähnlichen Güte (bezüglich Analyse) geführt. An dieses Mutterband kristallisiert die drei- bis sechsfache Menge der Schmelze beidseitig auf und tritt mit einer Dicke von ca. 4 bis 7 mm und einer Strangoberflächentemperatur von 1.520 °C sowie einem teigigen Zustand als Trägerband aus dem Schmelzbad heraus. Oberhalb der Badoberfläche wird diesem Band ein dünnes Austenitband mit einer Dicke von etwa 0,2 bis 1 mm zugeführt. Hierzu sind Rollenpaare vorgesehen, die als Glättwalzen das vorgewärmte dünne Austenitband mit dem noch teilweise flüssigen oder noch teigigen d. h. an seiner Oberfläche nicht vollständig erstarrten bzw. eine noch relativ hohe Temperatur aufweisenden kohlenstoffhaltigen Trägerband verschweißen.

In vorteilhafter Weise wird das Verbundprofil, beispielsweise das rostfreie Band (Austenit) durch einen Induktionsofen vorgeheizt. Weiterhin wird der Verbundstrang in der Weise über die Oberfläche des Inversionsrekristallisators geführt, daß die ihm zugewandte Oberfläche noch weiter aufgeheizt wird.

Um ein fehlerfreies Verschweißen der zweilagigen oder dreilagigen Verbundwerkstoffe zu erreichen, wird Einfluß genommen auf die Werkstoffe des Mutterstranges und der Schmelze, die Temperatur der Schmelze sowie die Badhöhe, die Geschwindigkeit des Mutterstranges und damit die Kontaktzeit bzw. die Aufnahmemenge der Schmelze auf das Band zum Trägerprofil sowie beim Zusammenführen des Trägerprofils und des Verbundprofils auf die Andrückkraft durch das erste Rollenpaar oberhalb des Schmelzbades.

Ein Beispiel der Erfindung ist der beiliegenden Zeichnung dargelegt. Dabei zeigt:

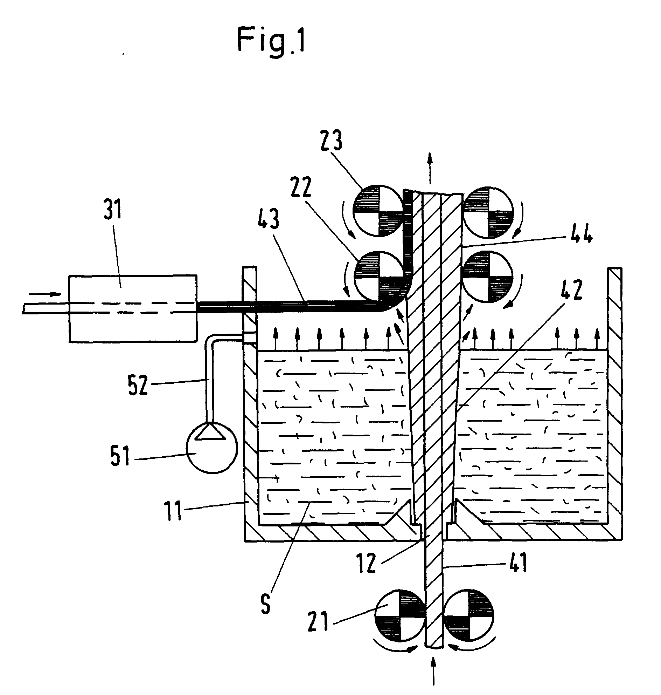

- Figur 1: das Schema der Einrichtung zur Herstellung von metallischen Verbundwerkstofffen.

In dem mit Schmelze S gefüllten Gefäß 11 ist im Boden eine Öffnung 12 vorgesehen, durch die ein Mutterstrang 41 in das Gefäß geführt wird. Während des Kontaktes des Mutterstranges 41 mit der Schmelze S kristallisiert die drei- bis sechsfache Menge der Schmelze beidseitig an dem Mutterstrang an, der als Trägerprofil 42 die Schmelze verläßt.

Der Mutterstrang wird durch die Zuführrollen 21 geführt und bewegt. Oberhalb der Schmelzbadoberfläche wird ein Verbundprofil 43 mindestens von einer Seite dem Trägerprofil 42 zugeführt und über eine Umlenkrolle 22 auf das Trägerprofil 42 aufgewalzt. Zur Führung und zum Bewegen des Fertigbandes 44 sind Abzugsrollen 23 vorgesehen.

Zum Vorwärmen des Verbundprofils 43 befindet sich außerhalb des Gefäßes 11 ein Wärmeofen 31.

Weiterhin ist eine Gasförderstation 51 vorgesehen, durch die über eine Zuleitung 52 in den Zwischenraum zwischen dem Verbundprofil 43 und der Badoberfläche der Schmelze S inertes Gas einleitbar ist.

## Patentansprüche

1. Verfahren zur Herstellung von metallischen Verbundwerkstoff, bei dem auf mindestens einer Seite eines Mutterstranges ein Werkstoff mit anderen Werkstoffeigenschaften aufgebracht wird,
gekennzeichnet durch folgende Schritte:
- der Mutterstrang wird mit einer Geschwindigkeit durch eine die gleiche werkstoffliche Zusammensetzung wie der Mutterstrang aufweisende Schmelze geführt, wobei inversiv die drei- bis sechsfache Menge der Schmelze auf dem Mutterstrang zu einem Trägerprofil aufkristallisiert
- in einem vorgebbaren Abstand von der Schmelzbadoberfläche wird nach dem Verlassen des Schmelzbades dem Trägerprofil ein Verbundprofil aus einem Werkstoff mit anderen Werkstoffeigenschaften zugeführt, das mit der Oberfläche des Trägerprofils zum Verschweißen gebracht wird.

2. Verfahren nach Anspruch 1;
dadurch gekennzeichnet,
daß das Verbundprofil mit Fremdenergie vorgewärmt wird.

3. Verfahren nach Anspruch 2,
dadurch gekennzeichnet,
daß das Verbundprofil in einem solchen Abstand über die Schmelzbadoberfläche geführt wird, daß dessen dem Bad zugewandte Fläche überhitzt wird.

4. Verfahren nach Anspruch 3,
dadurch gekennzeichnet,
daß mindestens die später miteinander sich verbindenden Oberflächen des Trägerprofils und des Verbundprofils mit Schutzgas belegt werden.

5. Verfahren nach einem der vorgenannten Ansprüche,
dadurch gekennzeichnet,
daß das Verbundprofil auf das Trägerprofil aufgewalzt wird.

6. Verfahren nach Anspruch 1,
dadurch gekennzeichnet,
daß der Mutterstrang ein kohlenstoffhaltiger Stahl, z.B. ST14 ist, der durch die eine um 0,5 bis 1,5 % höhere Temperatur aufweisende Schmelze gleicher Zusammensetzung geführt wird.

7. Verfahren nach Anspruch 1,
dadurch gekennzeichnet,
daß das Verbundprofil ein ferritischer oder austenitischer oder nickelhaltiger Stahl ist, dessen Schmelzpunkt 3 bis 4 % unterhalb des das Schmelzbad bildenden Metalls liegt.

8. Einrichtung zur Herstellung von metallischem Verbundwerkstoff mit einem im Boden eine Öffnung aufweisenden Gefäß, durch die ein Mutterstrang durch eine in das Gefäß füllbare Metallschmelze führbar ist, und mit Rollen zum Bewegen des Stranges beim Eintritt wie auch beim Verlassen der Schmelze, zur Durchführung des Verfahrens nach den Ansprüchen 1 bis 7,
dadurch gekennzeichnet,
daß mindestens an einer Seite des Gefäßes (11) ein Wärmeofen (31) angeordnet ist, das durch den Wärmeofen (31) ein Verbundprofil (43) führbar ist, und
daß das Verbundprofil (43) über eine Umlenkrolle (22) auf das die Schmelze (S) verlassende Trägerprofil (42) aufdrückbar ist.

9. Einrichtung nach Anspruch 8,
dadurch gekennzeichnet,
daß der Wärmeofen (31) und die Umlenkrollen (22) auf gleicher Höhe und zur Aufwärmung der der Schmelze zugewandten Seite zum Schmelzenpegel in ausreichender Entfernung angeordnet ist.

10. Einrichtung nach den Ansprüchen 9 oder 8,
dadurch gekennzeichnet,
daß als Trägerprofil (42) ein Blech oder ein Rohr Verwendung findet.

11. Einrichtung nach einem der Ansprüche 8 bis 10,
dadurch gekennzeichnet,
daß eine Gasförderstation (51) vorhanden ist, durch die im Gebrauch über eine Zuleitung (52) inertes Gas in den Zwischenraum zwischen Schmelzbadoberfläche und der Unterfläche des Verbundprofils (43) geführt wird.

## Claims

1. Method of manufacturing metal composite material, in which on at least one side of a mother strand a material with different properties is applied, characterised by the following steps:
■ the mother strand is passed through a melt having the same material composition as the mother strand at a speed whereby inversively three to six times the quantity of melt crystallises on the mother strand
■ at a specifiable distance from the melt bath surface, a composite profile composed of a material with different properties is fed to the support profile after the latter has left the melt bath, the composite profile being brought to weld on to the surface of the support profile.

2. Method according to claim 1, characterised in that the composite profile is preheated with independent energy.

3. Method according to claim 2, characterised in that the composite profile is passed at such a distance over the melt bath surface that its surface facing the bath is superheated.

4. Method according to claim 3, characterised in that at least the surfaces subsequently joining together of the support profile and the composite profile is supplied with protective gas.

5. Method according to one of the preceding claims, characterised in that the composite profile is rolled on to the support profile.

6. Method according to claim 1, characterised in that the mother strand is a carbon-containing steel, e.g. ST14, which is passed through the melt which has a 0.5 to 1.5-% higher temperature and which has the same composition.

7. Method according to claim 1, characterised in that the composite profile is a ferritic or austenitic or nickel-containing steel, whose melting point is 3 to 4 % below that of the metal forming the melt bath.

8. Apparatus for manufacturing metal composite material with a vessel having an aperture in the base, through which a mother strand can be passed through a metal melt filling the vessel, and having rollers for moving the strand upon entry to and departure from the melt, for carrying out the method according to claims 1 to 7, characterised in that at least on one side of the vessel (11) a heating furnace (31) is disposed, in that a composite profile (43) is passable through the heating furnace (31), and in that the composite profile (43) is pressable on to the support profile (42) leaving the melt (S) via a deflection roller (22).

9. Apparatus according to claim 8, characterised in that the heating furnace (31) and the deflection rollers (22) are disposed at the same height and the heating furnace (31) is disposed at a sufficient distance from the melt level in order to heat the side facing the melt.

10. Apparatus according to claims 8 or 9, characterised in that as a support profile (42) a plate or a tube is used.

11. Apparatus according to one of claims 8 to 10, characterised in that a gas conveying station (51) is provided, through which in use inert gas is supplied via a supply line (52) into the gap between the melt bath surface and the lower face of the composite profile (43).

## Revendications

1. Procédé pour fabriquer un matériau composite métallique, dans lequel un matériau ayant d'autres propriétés est appliqué sur au moins une face d'une barre mère,
caractérisé par les étapes suivantes :
- la barre mère est guidée, avec une certaine vitesse, à travers une matière en fusion présentant la même composition de matière que la barre mère, de trois à six fois la quantité de la matière en fusion étant cristallisées inversement sur la barre mère en un profilé de support,
- à un écartement pouvant être prédéfini de la surface du bain de la matière en fusion, il est amené, après avoir quitté le bain de matière en fusion, au profilé de support, un profilé composite en un matériau ayant d'autres propriétés, qui se soude à la surface du profilé de support.

2. Procédé selon la revendication 1,
caractérisé en ce que le profilé composite est préchauffé par de l'énergie extérieure.

3. Procédé selon la revendication 2,
caractérisé en ce que le profilé composite est guidé à un écartement au-dessus de la surface du bain de matière en fusion, tel que sa surface en regard du bain est surchauffée.

4. Procédé selon la revendication 3,
caractérisé en ce qu'au moins les surfaces, se reliant ensemble ultérieurement, du profilé de support et du profilé composite sont recouvertes d'un gaz protecteur.

5. Procédé selon une des revendications précitées,
caractérisé en ce que le profilé composite est laminé sur le profilé de support.

6. Procédé selon la revendication 1,
caractérisé en ce que la barre mère est un acier contenant du carbone, par exemple ST14, qui est guidé à travers la matière en fusion de même composition présentant une température plus élevée de 0,5 à 1,5%.

7. Procédé selon la revendication 1,
caractérisé en ce que le profilé composite est un acier ferritique ou austénitique ou contenant du nickel, dont le point de fusion est de 3 à 4% au-dessous du métal formant le bain de matière en fusion.

8. Dispositif pour fabriquer un matériau composite métallique, comportant un récipient présentant une ouverture dans le fond, à travers laquelle peut être guidée une barre mère à travers une matière en fusion métallique remplissant le récipient, et des rouleaux pour déplacer la barre lors de l'entrée ainsi que lors de la sortie de la matière en fusion, pour la mise en oeuvre du procédé selon les revendications 1 à 7,
caractérisé en ce que, au moins sur un côté du récipient (11), il est agencé un four de réchauffage (31), en ce qu'un profilé composite (43) peut être guidé à travers le four de réchauffage (31), et en ce que le profilé composite (43) peut être pressé, par l'intermédiaire d'un rouleau de renvoi (22), sur le profilé de support (42) quittant la matière en fusion (S).

9. Dispositif selon la revendication 8,
caractérisé en ce que le four de réchauffage (31) et les rouleaux de renvoi (22) sont agencés à la même hauteur et, pour réchauffer le côté en regard de la matière en fusion, à un écartement suffisant par rapport au niveau de la matière en fusion.

10. Dispositif selon les revendications 9 ou 8,
caractérisé en ce que, comme profilé de support (42), il est utilisé une tôle ou un tube.

11. Dispositif selon une des revendications 8 à 10,
caractérisé en ce qu'il est prévu un poste d'alimentation en gaz (51), à travers lequel, en service, du gaz inerte est guidé dans l'espace intermédiaire entre la surface du bain de matière en fusion et la face inférieure du profilé composite (43), par l'intermédiaire d'un conduit (52).
